# EUROPÄISCHE PATENTSCHRIFT

(11) **EP 3 716 421 B1**
(45) Veröffentlichungstag und Bekanntmachung des Hinweises auf die Patenterteilung: **21.06.2023**
(21) Anmeldenummer: 20166314.3
(22) Anmeldetag: 27.03.2020
(51) Int. Cl.: H02B 13/02, H02B 7/06

(54) **SCHALTANLAGE ZUR VERTEILUNG ELEKTRISCHER ENERGIE**
SWITCHING SYSTEM FOR DISTRIBUTING ELECTRICAL ENERGY
INSTALLATION DE COMMUTATION DESTINÉ À LA DISTRIBUTION D'ÉNERGIE ÉLECTRIQUE

(30) Priorität: 29.03.2019 DE 102019108262
(43) Veröffentlichungstag der Anmeldung: 30.09.2020
(73) Patentinhaber: Beluk GmbH, 86956 Schongau (DE)
(72) Erfinder: Buchmüller, Thomas, 86956 Schongau (DE); Fürst, Helmut, 86956 Schongau (DE)
(74) Vertreter: Schmitt-Nilson Schraud Waibel Wohlfrom Patentanwälte Partnerschaft mbB

(56) Entgegenhaltungen:
- DE-A1- 19 959 641
- FR-A1- 2 735 914
- Frietz Driescher & Söhne Gmbh: "DRIESCHER Luftisolierte Mittelspannungs - Kompakt -Lastschaltanlagen", , 7. März 2018 (2018-03-07), XP055706101, Gefunden im Internet: URL:https://driescher.de/wp-content/upload s/2018/03/788.pdf [gefunden am 2020-06-17]

## Beschreibung

Die Erfindung bezieht sich auf eine Schaltanlage zur Verteilung elektrischer Energie.

Aus der DE 93 05 438.6 ist eine Schaltanlage zur Verteilung elektrischer Energie bekannt, die zwei Kabelschalter und einen Transformatorschalter umfasst. Es ist eine gemeinsame erste Abdeckeinrichtung vorgesehen, die selektiv zwischen die Schaltkontakte des ersten oder des zweiten Kabelschalters bewegt werden kann. Auch für die Schaltkontakte des Transformatorschalters ist eine Abdeckeinrichtung vorgesehen.

Bei einer solchen Schaltanlage ist es von Nachteil, dass im Betrieb der Schaltanlage keinerlei Informationen über den Energiefluss derselben zur Verfügung stehen. Eine ähnliche Schaltanlage ist im DE19959641 A1 gezeigt, wobei die Schaltanlage einen Strom- und Spannungswandler auf der Einspeisungsseite, eine vertikale Sicherung und einen einzelnen horizontalen Schubschalter zum Schutz der Abgangsleitung umfasst.

Aus Frietz Driescher & Söhne Gmbh: "DRIESCHER Luftisolierte Mittelspannungs - Kompakt -Lastschaltanlagen", 7. März 2018 (2018-03-07), XP055706101, Gefunden im Internet: URL:https://driescher.de/wp-content/uploads/2018/03/788.pdf [gefunden am 2020-06-17] Seite 8 - Seite 10, ist eine luftisolierte Mittelspannungs-Kompakt-Lastschaltanlage bekannt. Dieses Dokument zeigt eine Schaltanlage zur Verteilung elektrischer Energie gemäß dem Oberbegriff von Anspruch 1.

Es ist daher eine Aufgabe der vorliegenden Erfindung, eine Schaltanlage zur Verteilung elektrischer Energie anzugeben, mit der die geflossene elektrische Energie erfasst werden kann.

Diese Aufgabe wird durch den Gegenstand des unabhängigen Patentanspruchs 1 gelöst.

Vorteilhafte Ausgestaltungen und Weiterbildungen der Erfindung ergeben sich aus den Unteransprüchen.

Mit einer solchen gemessenen Schaltanlage kann die elektrische Leistung und geflossene elektrische Energie, insbesondere der Strom und die Spannung in dem Abzweig, insbesondere dem Transformatorabzweig gemessen werden.

Bei der erfindungsgemäßen Schaltanlage handelt es sich insbesondere um eine kompakte Mittelspannungs-Schaltanlage. Die darin angeordneten Elemente, insbesondere die Schaltgeräte, können wesentlich kompakter ausgeführt werden, und ungewünschte Entladungen und Überschläge bis zum Kurzschluss können vermieden werden.

Die Messung von Strom und/oder Spannung und die daraus ermöglichte Ermittlung der elektrischen Leitung und der geflossenen elektrischen Energie in dem Gehäuse der Schaltanlage selbst war bislang nicht möglich.

Bei der erfindungsgemäßen Schaltanlage handelt es sich insbesondere um eine luftisolierte Mittelspannungsschaltanlage.

In einer typischen, aber nicht einschränkenden Ausgestaltung, kann die Eingangsspannung bis 24kV Nennspannung betragen. Der Eingangsstrom kann bis 1250A Nennstrom und 25kA/1s Kurzschlussstrom betragen. Die Ausgangsspannung und der Ausgangsstrom können kleiner oder gleich den Werten der Eingänge sein. Im Wesentlichen hängen die elektrischen Spannungs- und Stromwerte der Schaltanlage von den eingesetzten Schaltgeräten ab.

Wenn ein Transformator nachgeschaltet ist, wird die Spannung üblicherweise auf ein Level von etwa 400 V für das nachgeschaltete Verteilnetz heruntertransformiert.

Erfindungsgemäß wird es somit ermöglicht, die Energie-Bezug-Lieferung aus dem vorgeschalteten Verteilnetz in das nachgeschaltete Verteilnetz, insbesondere nach den Vorgaben der technischen Anwendungsregelungen bzw. Vorgaben der Verteilnetzbetreiber messen und abrechnen zu können.

Erfindungsgemäß wird die Strom- und/oder Spannungsmessung bei minimalem Platzbedarf ermöglicht, insbesondere dadurch, dass das Überstromschutzelement unterhalb des dritten Schaltgeräts, insbesondere unterhalb des Transformatorschalters angeordnet ist und dass die Strom- und/oder Spannungsmesseinrichtung seitlich neben dem Überstromschutzelement und benachbart einer Gehäusewand angeordnet ist. Dadurch kann auf kleinem Raum benachbart dem zweiten Schaltgerät, insbesondere dem zweiten Kabelschalter eine Strom- und Spannungsmessung durchgeführt werden. Bauraum, Fläche und Ressourcen werden somit optimal ausgenutzt.

Insbesondere können auch bestehende Schaltanlagen mit einer erfindungsgemä-ßen Strom- und/oder Spannungsmesseinrichtung nachgerüstet werden, indem insbesondere das Überstromschutzelement und die Strom- und/oder Spannungsmesseinrichtung erfindungsgemäß vorgesehen und angeordnet werden. Dabei kann das bestehende Gehäuse unverändert belassen werden, es muss nicht vergrößert werden und die die Form kann unverändert bleiben. Bei dem Gehäuse kann es sich insbesondere um ein geschlossenes Metallgehäuse bzw. eine geschlossene Metallkapsel handeln. Ebenso kann eine erfindungsgemäße Schaltanlage in einem Gehäuse angeordnet werden, das dem Gehäuse einer vergleichbaren Schaltanlage ohne erfindungsgemäße Strom- und/oder Spannungsmesseinrichtung entspricht. Ein Retrofit ist somit möglich. Auch die Bedien- und Kontroll-öffnungen können normalerweise unverändert verbleiben.

Der Transformator, die Schaltanlage, die Energieerzeugungsanlage, der Energiespeicher oder das andere elektrische Betriebsmittel, der bzw. das über den Abzweig mit dem dritten Schaltgerät verbunden werden kann, kann üblicherweise in einem Raum hinter bzw. neben der erfindungsgemäßen Schaltanlage angeordnet sein, zum Beispiel in einer Entfernung von etwa 1m, und von dieser durch eine Wand getrennt.

Die Eingangsleitungen des ersten und zweiten Schaltgeräts, insbesondere der beiden Kabelschalter sind insbesondere mit dem vorgeschalteten Verteilnetz verbunden.

Das Überstromschutzelement kann auch als Hochspannungs-/ Hochleistungssicherung bzw. HH-Sicherung, Schmelzsicherung oder allgemeiner auch nur als Sicherung bezeichnet werden. Diese ist so ausgebildet, dass sie durch das Abschmelzen eines Schmelzleiters den Stromkreis unterbricht, wenn die Stromstärke einen bestimmten Wert während einer ausreichenden Zeit überschreitet.

Das erste und zweite Schaltgerät, insbesondere die beiden Kabelschalter können spiegelsymmetrisch zu einer dazwischen liegenden vertikalen Ebene des Gehäuses angeordnet sein.

Die Spannungsmesseinrichtung kann insbesondere einen Spannungswandler aufweisen, und ist dazu ausgebildet, die Spannung in dem Abzweig, insbesondere dem Transformatorabzweig nach dem Überstromschutzelement zu messen. Wenn kein Überstromschutzelement in dem Abzweig, insbesondere Transformatorabzweig angeordnet ist, misst sie die Spannung in dem Abzweig.

Die Strommesseinrichtung kann insbesondere einen Stromwandler aufweisen, und ist dazu ausgebildet, den Strom in dem Abzweig, insbesondere dem Transformatorabzweig nach dem Überstromschutzelement zu messen. Wenn kein Überstromschutzelement in dem Abzweig, insbesondere Transformatorabzweig angeordnet ist, misst sie den Strom in dem Abzweig.

Durch das Vorsehen eines Spannungswandlers kann die Spannung in dem Abzweig, insbesondere dem Transformatorabzweig, insbesondere nach dem Überstromschutzelement zuverlässig gemessen werden, und ebenso kann durch den Stromwandler der Strom in dem Abzweig, insbesondere dem Transformatorabzweig, insbesondere nach dem Überstromschutzelement zuverlässig gemessen werden. Der Spannungswandler misst dabei die Spannung in dem Abzweig, insbesondere dem Transformatorabzweig, der Stromwandler misst den Strom, der durch ihn hindurchfließt. Der Spannungswandler benötigt nur wenig Energie, da nur die Spannung dort gemessen wird.

Es ist besonders platzsparend und spart Grundfläche, wenn die Spannungsmesseinrichtung, insbesondere der Spannungswandler oberhalb der Strommesseinrichtung, insbesondere oberhalb des Stromwandlers angeordnet ist. Durch die Anordnung der Spannungsmesseinrichtung, insbesondere des Spannungswandlers oberhalb der Strommesseinrichtung, insbesondere des Stromwandlers, und durch die Befestigung der Spannungsmesseinrichtung, insbesondere des Spannungswandlers und der Strommesseinrichtung, insbesondere des Stromwandlers, mit deren Rückseiten an der äußeren Gehäusewand oder dem Anliegen daran, ergibt sich ein besonders kompakter Aufbau und eine besonders platzsparende Unterbringung dieser beiden Elemente in dem gemeinsamen Gehäuse.

Gemäß einer weiteren Ausführungsform ist weiterhin eine Zähleinheit vorgesehen, die mit der Spannungsmesseinrichtung und mit der Strommesseinrichtung verbunden ist, und die dazu ausgebildet ist, aus dem Produkt der gemessenen Spannung mit dem gemessenen Strom die elektrische Leistung zu bestimmen und/oder die geflossene elektrische Energie zu erfassen. Die so gemessene elektrische Leistung und die so erfasste geflossene elektrische Energie kann beispielsweise für Verrechnungszwecke verwendet werden.

Gemäß einer weiteren Ausführungsform verfügen die Spannungsmesseinrichtung und die Strommesseinrichtung jeweils über einen Anschlusskasten, der insbesondere oberhalb der Spannungsmesseinrichtung bzw. der Strommesseinrichtung angeordnet ist, und der insbesondere mit seiner Rückseite an der äußeren Gehäusewand anliegt und/oder an dieser befestigt ist. An solche Anschlusskästen können die Drähte für die Zähleinheit angeschlossen sein/werden.

Zur zuverlässigen Isolierung der Spannungsmesseinrichtung, insbesondere des Spannungswandlers von dem Transformatorschalter kann ein Isolierungselement, insbesondere ein Isolierungswinkel zwischen der Spannungsmesseinrichtung, insbesondere dessen Anschlusskasten und dem dritten Schaltgerät, insbesondere dem Transformatorschalter angeordnet sein.

Gemäß einer weiteren Ausführungsform weist das Überstromschutzelement einen oberen Eingangskontakt und einen unteren Ausgangskontakt auf; und/oder die Strommesseinrichtung weist einen oberen Eingangskontakt und einen unteren Ausgangskontakt auf. Der untere Ausgangskontakt des Überstromschutzelements kann mittels eines elektrisch leitenden Verbindungsstücks mit dem oberen Eingangskontakt der Strommesseinrichtung elektrisch verbunden sein. Das elektrische leitende Verbindungsstück kann gleichzeitig eine erste mechanische Halterung für das Überstromschutzelement bilden. Das elektrisch leitende Verbindungsstück kann beispielsweise als Kupferschiene ausgebildet sein.

Dadurch ergibt sich einerseits eine zuverlässige elektrische Verbindung des unteren Ausgangskontaktes des Überstromschutzelements mit dem oberen Eingangskontakt der Strommesseinrichtung, insbesondere des Stromwandlers und gleichzeitig eine zuverlässige mechanische Halterung, die zu einer besonders kompakten und platzsparenden Bauweise beiträgt.

Gemäß einer weiteren Ausführungsform ist der obere Eingangskontakt des Überstromschutzelements mittels eines Halterungselements, insbesondere einem Winkel an dem dritten Schaltgerät, insbesondere dem Transformatorschalter, insbesondere an dessen unterem Schaltkontakt gehaltert. Auch diese Ausführungsform trägt zu einer kompakten und platzsparenden Bauweise bei.

Gemäß einer weiteren Ausführungsform ist ein weiteres elektrisch leitendes Verbindungsstück vorgesehen, das entweder den oberen Eingangskontakt oder den unteren Ausgangskontakt der Strommesseinrichtung mit der Spannungsmesseinrichtung verbindet.

Durch ein derartiges elektrisch leitendes Verbindungsstück kann die Spannungsmesseinrichtung, insbesondere der Spannungswandler auf einfache Weise mit dem Abzweig, insbesondere dem Transformatorabzweig verbunden werden, und die Spannung in dem Abzweig, insbesondere dem Transformatorabzweig kann zuverlässig gemessen werden. Die einfachste Verbindungsvariante ist diejenige vom oberen Eingangskontakt der Strommesseinrichtung, insbesondere des Stromwandlers zu der Spannungsmesseinrichtung, insbesondere dem Spannungswandler.

Wenn jedoch der Netzbetreiber fordert, dass der untere Eingangskontakt der Strommesseinrichtung mit der Spannungsmesseinrichtung verbunden werden soll, so ist dies erfindungsgemäß ebenfalls ohne Probleme möglich. Hierfür kann zum Beispiel ein Loch in dem elektrisch leitenden Verbindungsstück, welches den unteren Ausgangskontakt des Überstromschutzelements mit dem oberen Eingangskontakt der Strommesseinrichtung elektrisch verbindet, vorgesehen sein und durch dieses Loch kann eine Leitung vom unteren Anschlusskontakt der Strommesseinrichtung nach oben zu der Spannungsmesseinrichtung geführt werden.

Gemäß einer weiteren Ausführungsform ist weiterhin eine Erdungseinrichtung mit einem Antrieb und mit einem Metallmesser vorgesehen. Der Antrieb kann dabei das Metallmesser zwischen einer nach unten gerichteten Ausschaltestellung und einer waagerechten Erdungsstellung bewegen. In der waagerechten Erdungsstellung stellt das Metallmesser eine Verbindung zwischen dem metallenen Gehäuse und einem Gegenkontaktstück an dem unteren Ausgangskontakt der Strommesseinrichtung her.

Gemäß einer weiteren Ausführungsform sind das Überstromschutzelement, die Strommesseinrichtung, die Spannungsmesseinrichtung und optional die Erdungseinrichtung in einem Zwischenraum unterhalb des dritten Schaltgeräts, insbesonere unterhalb des Transformatorschalters und neben dem zweiten Schaltgerät, insbesondere neben dem mittig angeordneten Kabelschalter untergebracht.

Durch die erfindungsgemäße Anordnung dieser Elemente in diesem Zwischenraum kann dieser Zwischenraum mit der gleichen Breite und Höhe ausgebildet sein wie zum Beispiel der entsprechende Zwischenraum bei der DE 93 05 438.6.

Gemäß einer weiteren Ausführungsform ist an der Rückseite des zweiten Schaltgeräts, insbesondere Kabelschalters, der benachbart dem Überstromschutzelement angeordnet ist, eine metallene Zwischenwand vorgesehen. Zwischen dieser metallenen Zwischenwand und dem Überstromschutzelement kann eine isolierende Kunststoff-Zwischenwand angeordnet sein.

Durch eine solche zusätzliche isolierende Kunststoff-Zwischenwand können das Überstromschutzelement, der Stromwandler und der Spannungswandler gegenüber dem zweiten Schaltgerät bzw. mittig angeordneten Kabelschalter elektrisch isoliert werden, und eine hohe dielektrische Festigkeit kann erreicht werden.

Gemäß einer weiteren Ausführungsform ist am oberen Ende des Überstromschutz-Element ein Schlagbolzen angeordnet. Oberhalb des ÜberstromschutzElements kann ein Hammer angeordnet sein. Weiterhin können ein Isoliergestänge, ein Federkraftspeicher und ein Auslöseschloss vorgesehen sein.

In dem Fall, dass das Überstromschutzelement bedingt durch Überstrom durchschmilzt, wird der Schlagbolzen nach oben aus dem Überstromschutzelement herausbewegt und den Hammer schräg nach oben bewegt, der wiederum über das Isoliergestänge diesen Impuls an den Federkraftspeicher weiterleitet, der über das Auslöseschloss das dritte Schaltgerät, insbesondere den Transformatorschalter zum Ausschalten zwingt.

Mittels einer solchen Ausführungsform kann in dem Falle, dass in dem Abzweig, insbesondere dem Transformatorabzweig die Stromstärke einen bestimmten Wert über eine bestimmte Zeit überschreitet und das Überstromschutzelement daher durchschmilzt, eine zuverlässige Sicherheitsausschaltung des dritten Schaltgeräts, insbesondere des Transformatorschalters erreicht werden.

Gemäß einer weiteren Ausführungsform sind weiterhin isolierende Abdeckeinrichtungen vorgesehen, die im geöffneten Zustand der Schaltgeräte zwischen deren Schaltkontakte einschiebbar sind.

Dadurch können die spannungsführenden Bereiche des jeweiligen Schaltgerätes bei Bedarf sicher abgedeckt werden.

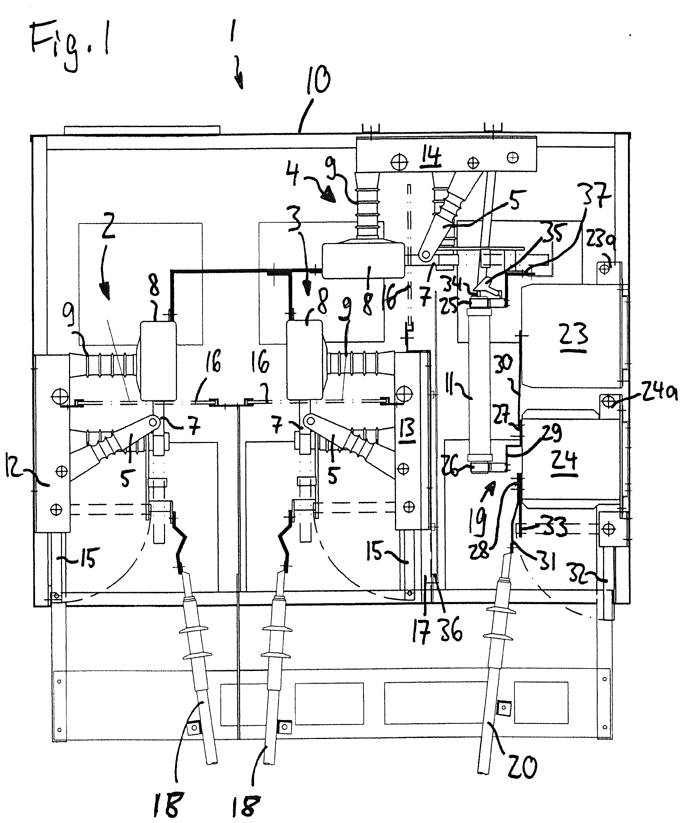

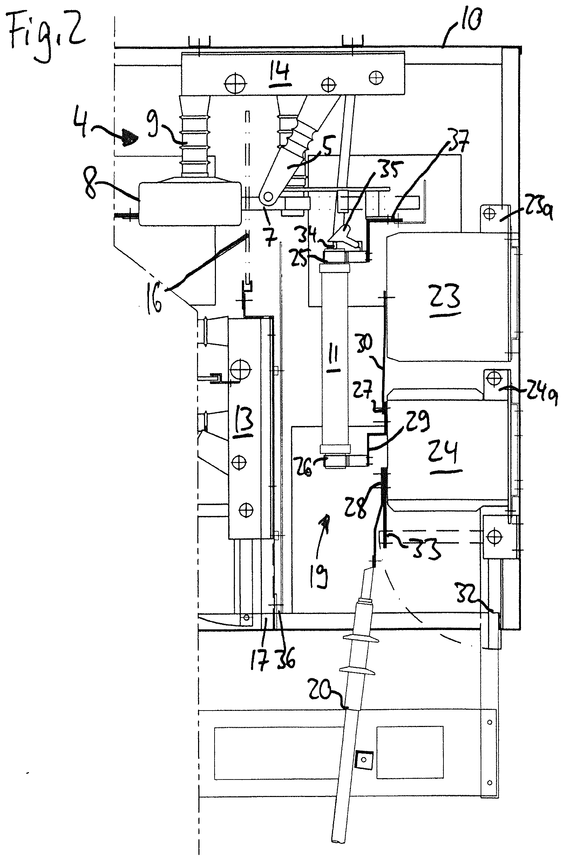

Ein Ausführungsbeispiel der Erfindung wird im Folgenden anhand der beigefügten Figuren 1 und 2 näher erläutert.
Fig. 1 zeigt eine Vorderansicht eines Ausführungsbeispiels einer Schaltanlage mit zwei Kabelschaltern und einem Transformatorschalter, mit abgenommener vorderer Gehäusewand; und
Fig. 2 zeigt eine Detailansicht eines rechten Bereichs dieser Schaltanlage, der den Transformatorschalter und einen Transformatorabzweig mit einem Überstromschutzelement, mit einem Spannungswandler und mit einem Stromwandler umfasst.

In Fig. 1 ist ein Ausführungsbeispiel der Schaltanlage 1 dargestellt. Diese Schaltanlage 1 umfasst ein gemeinsames Gehäuse 10, in dem ein erstes und ein zweites Schaltgerät 2, 3 angeordnet sind, die mittels jeweiligen Eingangsleitungen 18 mit dem vorgeschalteten Spannungsverteilungsnetz verbunden sind.

Die Schaltanlage 1 umfasst weiterhin ein drittes Schaltgerät 4, der zur Verbindung mit einem Transformator, einer Schaltanlage, einer Energieerzeugungsanlage, einem Energiespeicher oder einem anderen elektrischen Betriebsmittel dient.

In dem vorliegenden, nicht beschränkenden Ausführungsbeispiel ist das dritte Schaltgerät 4 dafür eigerichtet, mit einem Transformator verbunden zu sein, und einen Transformatorschalter 4 zu bilden.

In dem vorliegenden, nicht beschränkenden Ausführungsbeispiel bilden die Schaltgeräte 2 und 3 einen ersten und einen zweiten Kabelschalter.

Die Schaltgeräte 2, 3, 4 nach Fig. 1 weisen einen im Wesentlichen identischen Aufbau auf und umfassen jeweils eine Betätigungseinrichtung 12, 13 bzw. 14, an der über einen ersten Isolator 9 ein Schaltkopf 8 befestigt ist, der einen festen Schaltkontakt enthält, der mit einem beweglichen Schaltkontakt 7 bei dessen Betätigung in Längsrichtung in Kontakt gebracht werden kann. Dieser bewegliche Schaltkontakt 7 ist über einen weiteren Isolator 5 von der jeweils zugeordneten Betätigungseinrichtung 12, 13 bzw. 14 betätigbar. Die Betätigung der Kabelschalter 2, 3 erfolgt damit gemäß Fig. 1 in Vertikalrichtung, während die Betätigung des Transformatorschalters 4 in Horizontalrichtung erfolgt.

Die Kabelschalter 2, 3 sind weiterhin mit Erdungsschaltern 15 versehen, die verschwenkbar sind, wie dies durch eine bogenförmige Linie angedeutet ist, um mit einem Gegenkontakt an dem beweglichen Kontakt 7 in dessen Ausschaltstellung in Kontakt zu kommen, damit dieser geerdet werden kann.

Wie dies aus Fig. 1 zu erkennen ist, sind die Kabelschalter 2, 3 spiegelsymmetrisch zu einer Ebene 16 derart angeordnet, dass die Schaltkontakte 7, 8 aufeinander gerichtet sind, während die Betätigungseinrichtungen 12, 13 mit ihren Rückseiten an jeweiligen metallischen Wänden befestigt sind, die Betätigungseinrichtung 12 an einer Gehäuseaußenwand und die Betätigungseinrichtung 13 an einer Gehäusezwischenwand.

Zwischen dem beweglichen Schaltkontakt 7 und dem festen Schaltkontakt des Schaltkopfs 8 der Kabelschalter 2, 3, und 4 können jeweilige isolierende Trennplatten angeordnet bzw. eingeschoben werden. Die jeweiligen Trennplatten-Einbringungsebenen 16 der drei Schaltgeräte 2, 3, und 4 sind durch gestrichelte Doppellinien dargestellt.

Wie dies weiterhin aus Fig. 1 zu erkennen ist, ist der Transformatorschalter 4 zumindest teilweise oberhalb des zweiten Kabelschalters 3 angeordnet, und die Betätigungsrichtung seines beweglichen Schaltkontaktes 7 verläuft in horizontaler Richtung.

Die Betätigungseinrichtung 14 dieses Transformatorschalters 4 ist an der Decke des Gehäuses 1 befestigt, wobei dieser Transformatorschalter 4 jedoch keinen integrierten Erdungsschalter aufweist.

Der bewegliche Schaltkontakt 7 des Transformatorschalters 4 ist in dem vorliegenden, nicht beschränkenden Ausführungsbeispiel über ein Überstromschutzelement 11, das auch als Sicherung bezeichnet werden kann, mit der zum hier nicht gezeigten, z.B. hinter der Schaltanlage 1 liegenden Transformator führenden Ausgangsleitung 20 verbunden, wobei diese Ausgangsleitung 20 eine getrennte Erdungseinrichtung 32 geerdet werden kann.

Falls kein Überstromschutzelement 11 in dem Transformatorabzweig 19 vorgesehen ist, sind der Spannungswandler 23 und der Stromwandler 24 an der Leitung zwischen dem Transformatorschalter 4 und dem Transformator angeschlossen.

Wie dies aus Fig. 1 zu erkennen ist, ergibt sich durch die spiegelsymmetrische Anordnung der Kabelschalter 2, 3 bezogen auf die zwischen den beiden Kabelschaltern 2 und 3 verlaufende vertikale Ebene ein sehr kompakter Aufbau.

Eine weitere Einsparung des Raumbedarfs ergibt sich durch die Anordnung des Transformatorschalters 4 teilweise oberhalb des zweiten Kabelschalters 3, und durch die Anordnung des Abweigs 19 mit Überstromschutzelement 11, mit Spannungswandler 23, mit Stromwandler 24 und mit Erdungseinrichtung 32 in dem Zwischenraum unterhalb des Transformatorschalters 4 und neben dem mittig angeordneten, rechten Kabelschalter 3. Auf diese Weise wird Platz in Querrichtung gemäß Fig. 1 eingespart und weiterhin die erforderliche Höhenerstreckung für das Überstromschutzelement 11 geschaffen, die verglichen mit Anordnungen bei bekannten Schaltgeräten um 90° gedreht und damit raumsparend angeordnet ist. Der obere Anschlusskontakt 25 des Überstromschutzelements 11 ist über einen Winkel mit dem Transformatorschalter 4 verbunden.

Da der Abweig 19 zu dem nachgeschalteten Transformator führt, wird er als Transformatorabzweig 19 bezeichnet. Der Transformatorabzweig 19 wird gebildet durch die Ausgangsleitung des Transformatorschalters 4, die über das Überstromschutzelement 11 und die Ausgangsleitung 20 zum Transformator führt.

Dieser Transformatorabzweig beinhaltet weiterhin die nachfolgend beschriebenen Elemente.

Der Transformator ist in den Figuren nicht gezeigt und kann beispielsweise hinter der Schaltanlage angeordnet sein.

Das Überstromschutzelement 11 ist in Fig. 1 vollständig unterhalb des Transformatorschalters 4 und insbesondere unterhalb von dessen Betätigungseinrichtung 14 angeordnet. Rechts von dem Überstromschutzelement 11 sind eine Spannungsmesseinrichtung 23 und eine Strommesseinrichtung 24 vorgesehen. Diese sind rechts von dem Überstromschutzelement 11 angeordnet und mit ihren in der Fig. 1 rechts gelegenen Rückseiten an der rechten Gehäuseaußenwand befestigt.

Die Spannungsmesseinrichtung 23 ist oberhalb der Strommesseinrichtung 24 angeordnet. Die Spannungsmesseinrichtung 23 befindet sich auf der Höhe der oberen Hälfte des Überstromschutzelements 11. Die Strommesseinrichtung 24 befindet sich auf Höhe des unteren Viertels des Überstromschutzelements 11 und erstreckt sich noch ein Stück weiter nach unten als das Überstromschutzelement 11.

Die Spannungsmesseinrichtung 23 ist im vorliegenden Ausführungsbeispiel als Spannungswandler ausgebildet. Ebenso ist die Strommesseinrichtung 24 als Stromwandler ausgebildet.

Sowohl die Spannungsmesseinrichtung 23 als auch die Strommesseinrichtung 24 verfügen jeweils über einen Anschlusskasten 23a, 24a. Der Anschlusskasten 23a der Spannungsmesseinrichtung 23 ist oberhalb der Spannungsmesseinrichtung 23 angeordnet und weist mit seiner Rückseite zu der rechten Gebäudeaußenwand. Ebenso ist der Anschlusskasten 24a der Strommesseinrichtung 24 oberhalb der Strommesseinrichtung 24 angeordnet und weist mit seiner Rückseite zu der rechten Gehäuseaußenwand. An die Anschlusskästen 23a und 24a kann eine Zähleinheit angeschlossen werden, zum Beispiel mittels Kabeln, die dazu ausgebildet ist, aus dem Produkt der in der Spannungsmesseinrichtung 23 gemessenen Spannung und dem in der Strommesseinrichtung 24 gemessenen Strom die elektrische Leistung zu bestimmen und über die Zeit die geflossene elektrische Energie zu erfassen. Die Zähleinheit ist hier nicht gezeigt und kann beispielsweise an der Außenseite des Gehäuses 10 angebracht werden.

Unterhalb der Strommesseinrichtung 24 ist eine Erdungseinrichtung 32 für den Transformatorabzweig 19 vorgesehen. Diese hat einen Antrieb und einen Metallmesser. Der Antrieb kann das Metallmesser zwischen einer nach unten gerichteten Ausschaltestellung und einer waagerechten Erdungsstellung bewegen, wie dies durch die gestrichelte bogenförmige Linie dargestellt ist. In der waagrechten Erdungsstellung, die durch eine gestrichelte Linie dargestellt ist, stellt das Metallmesser eine Verbindung zwischen dem metallenen Außengehäuse 10 und einem Gegenkontaktstück 33 an dem unteren Ausgangskontakt 28 der Strommesseinrichtung her und erdet somit den Transformatorabzweig 19.

Das Überstromschutzelement 11 hat einen oberen Eingangskontakt 25 und einen unteren Ausgangskontakt 26. Die Strommesseinrichtung 24 hat einen oberen Eingangskontakt 27 und einen unteren Ausgangskontakt 28.

Der untere Ausgangskontakt 26 des Überstromschutzelements 11 ist mittels eines elektrisch leitenden Verbindungsstücks 29, das in dem Ausführungsbeispiel gestuft ausgeführt ist und z.B. als Kupferschiene ausgeführt sein kann, mit dem oberen Eingangskontakt 27 der Strommesseinrichtung 24 elektrisch verbunden. Dieses elektrisch leitende Verbindungsstück 29 bildet gleichzeitig eine erste mechanische Halterung für das Überstromschutzelement 11.

Der obere Eingangskontakt 25 des Überstromschutzelements 11 ist mittels eines weiteren Halterungselements an dem Transformatorschalter 4 insbesondere an dessen unterem Schaltkontakt gehaltert, er kann ebenfalls an einer Isolierplatte 37 mechanisch gehaltert sein, welche schräg links oberhalb der Spannungsmesseinrichtung 23 angeordnet sein kann.

Die Spannungsmesseinrichtung 23 kann mit dem Transformatorabzweig 19 über ein weiteres elektrisch leitendes Verbindungsstück 30 verbunden sein.

In dem Ausführungsbeispiel gemäß Fig. 1 verbindet dieses elektrisch leitende Verbindungsstück 30 den oberen Eingangskontakt der Strommesseinrichtung 24 mit der Spannungsmesseinrichtung 23. Ebenso ist es möglich, den unteren Ausgangskontakt 28 der Strommesseinrichtung 24 mit der Spannungsmesseinrichtung 23 zu verbinden.

Zwischen dem unteren Ausgangskontakt 28 der Strommesseinrichtung 24 und der Ausgangsleitung 20 zum Transformator ist ein elektrisch leitendes Verbindungsstück 31 vorgesehen. Dieses elektrisch leitende Verbindungsstück 31 und der Gegenkontakt 33 für die Erdungseinrichtung 32 schließen dabei beide an dem unteren Ausgangskontakt 28 der Strommesseinrichtung 24 an. Das elektrisch leitende Verbindungsstück 31 weist unterhalb des unteren Ausgangskontakts 28 einen schrägen Zwischenabschnitt und einen sich daran anschließenden im Wesentlichen vertikalen unteren Abschnitt auf, so dass der schräge Zwischenabschnitt und der vertikale untere Abschnitt des elektrisch leitenden Verbindungsstücks 31 von dem vertikal verlaufenden Gegenkontaktstück 33 für die Erdungseinrichtung beabstandet sind.

Das Überstromschutzelement 11 verfügt des Weiteren über eine automatische Transformatorschalter-Sicherheitsausschalteinrichtung für den Sicherungsfall. Diese umfasst einen Schlagbolzen 34 am oberen Ende des Überstromschutzelements 11, einen Hammer oberhalb des Überstromschutzelements 11, und insbesondere oberhalb des Schlagbolzens 34 und weiterhin ein Isoliergestänge, einen Federkraftspeicher und ein Auslöseschloss. In dem Fall, dass das Überstromschutzelement 11 bedingt durch Überstrom durchschmilzt, wird der Schlagbolzen 34 nach oben aus dem Überstromschutzelement 11 herausbewegt und bewegt den Hammer 35 schräg nach oben. Dieser betätigt das Isoliergestänge und gibt diesen Impuls an den Federkraftspeicher weiter, der über das Auslöseschloss den Transformatorschalter 4 zum Ausschalten zwingt.

An der Rückseite des zweiten Kabelschalters 3, insbesondere an der Rückseite von dessen Betätigungseinrichtung 13 ist eine vertikale Metall-Zwischenwand angeordnet. Rechts davon befindet sich eine weitere isolierende Kunststoff-Zwischenwand, zur Isolierung des Transformatorabzweigs 19 mit Überstromschutzelement 11, mit Spannungsmesseinrichtung 23 und mit Strommesseinrichtung 24.

Der Transformatorabzweig mit Überstromschutzelement 11, mit Spannungsmesseinrichtung 23, mit Strommesseinrichtung 24 und optional mit Erdungseinrichtung 32 ist in einem Zwischenraum unterhalb des Transformatorschalters 4 und rechts von dem mittig angeordneten Kabelschalter 3 untergebracht, was besonders platzsparend ist und eine kompakte Bauweise sowie ein Nachrüsten/Retrofit von bestehenden Schaltanlagen mit einem erfindungsgemäß ausgebildeten Transformatorabzweig 19 ermöglicht.

Eine weitere isolierende Zwischenwand, im vorliegenden Ausführungsbeispiel eine winkelartige Isolierplatte 37 ist links oberhalb der Spannungsmesseinrichtung 23 angeordnet und isoliert diese elektrisch von dem Transformatorschalter 4. Mittels der Spannungsmesseinrichtung 23 kann die Spannung in dem Transformatorabzweig 19 nach dem Überstromschutzelement 11 gemessen werden. Ebenso kann durch die Strommesseinrichtung 24 der Strom in dem Transformatorabzweig 19 nach dem Überstromschutzelement 11 gemessen werden.

Mittels der vertikalen Zwischenwand 36, die auch als Isolierplatte bezeichnet werden kann und mittels der Isolierplatte 37 wird die dielektrische Festigkeit gewährleistet.

In dem gemeinsamen Gehäuse 10 kann als Isolatormedium Luft verwendet werden, was besonders umweltfreundlich ist und zum Klimaschutz beiträgt.

Dadurch, dass die Grundfläche für die erfindungsgemäße Schaltanlage 1 gegenüber herkömmlichen Schaltanlagen nicht vergrößert wird, wird kein zusätzlicher Baugrund und auch kein zusätzlicher Bauraum benötigt, um eine erfindungsgemäße Schaltanlage 1 zu erstellen oder eine bestehende Schaltanlage mit einem erfindungsgemäßen Transformatorabzweig 19 auszurüsten. Die erfindungsgemä-ße Schaltanlage 1 ermöglicht eine direkte Strom- und Spannungsmessung und damit eine Ermittlung der geflossenen elektrischen Leistung und Energie.

### Bezugszeichenliste

- 1: Schaltanlage
- 2: erster Kabelschalter
- 3: zweiter Kabelschalter
- 4: Transformatorschalter
- 5: Isolator
- 7: beweglicher Schaltkontakt
- 8: Schaltkopf
- 9: Isolator
- 10: gemeinsames Gehäuse
- 11: Überstromschutzelement
- 12, 13, 14: Betätigungseinrichtungen
- 15: Erdungsschalter
- 16: Trennplatten-Einbringungsebene
- 17: Rückwand
- 18: Eingangsleitungen
- 19: Transformatorabzweig
- 20: Ausgangsleitung zum Transformator
- 23: Spannungswandler
- 23a: Anschlusskasten
- 24: Stromwandler
- 24a: Anschlusskasten
- 25: oberer Eingangskontakt Überstromschutzelement
- 26: unterer Ausgangskontakt Überstromschutzelementaufweist;
- 27: oberer Eingangskontakt Stromwandler
- 28: unterer Ausgangskontakt Stromwandler
- 29: elektrisch leitendes Verbindungsstück zum Stromwandler
- 30: elektrisch leitendes Verbindungsstück zum Spannungswandler
- 31: elektrisch leitendes Verbindungsstück zur Transformator-Ausgangsleitung
- 32: Erdungseinrichtung
- 33: Gegenkontakt für Erdungseinrichtung
- 34: Schlagbolzen
- 35: Hammer
- 36: Isolierplatte
- 37: Isolierplatte

## Patentansprüche

1. Schaltanlage (1) zur Verteilung elektrischer Energie, aufweisend
in Gehäuseanordnungen angeordnete Schaltgeräte (2, 3, 4), deren Schaltkontakte (7, 8) in einer vorgegebenen Betätigungsrichtung zum Öffnen und Schließen betätigbar sind, um den Energiefluss von oder an mindestens einen Transformator, eine Schaltanlage, eine Energieerzeugungsanlage, einen Energiespeicher oder ein anderes elektrisches Betriebsmittel zu steuern;
wobei die Betätigungseinrichtungen (12, 13, 14) der Schaltkontakte (7, 8) im Wesentlichen benachbart den Schaltkontakten (7, 8) angeordnet sind;
wobei ein erstes und ein zweites Schaltgerät (2, 3) mit im Wesentlichen vertikaler Betätigungsrichtung angeordnet sind und die Schaltkontakte (7, 8) des ersten und zweiten Schaltgeräts (2, 3) aufeinander gerichtet sind;
wobei ein drittes Schaltgerät (4) mit einer im Wesentlichen horizontalen Betätigungsrichtung zumindest teilweise oberhalb des ersten oder zweiten Schaltgeräts (2, 3) angeordnet ist;
wobei ein Abzweig (19) dafür eingerichtet ist das dritte Schaltgerät (4) mit einem nachgeschalteten Transformator, einer nachgeschalteten Schaltanlage, einer nachgeschalteten Energieerzeugungsanlage, einem nachgeschalteten Energiespeicher oder einem nachgeschalteten anderen elektrischen Betriebsmittel zu verbinden; und
wobei eine Spannungsmesseinrichtung (23) und eine Strommesseinrichtung (24) vorgesehen sind, die dazu ausgebildet sind, die Spannung und den Strom in dem Abzweig (19) zu messen;
**dadurch gekennzeichnet, dass**
der Abzweig (19) ein Überstromschutzelement (11) umfasst, das eine im Wesentlichen vertikale Einbaulage hat; und
die Spannungsmesseinrichtung (23) und die Strommesseinrichtung (24) benachbart einer äußeren Gehäusewand (10) angeordnet sind und mit ihren Rückseiten an der äußeren Gehäusewand (10) anliegen und/oder an dieser befestigt sind.

2. Schaltanlage (1) nach Anspruch 1,
wobei das erste und das zweite Schaltgerät als Kabelschalter (2, 3) ausgebildet sind; und/oder
wobei das dritte Schaltgerät als Transformatorschalter (4) ausgebildet ist.

3. Schaltanlage (1) nach Anspruch 2,
wobei der Abzweig als Transformatorabzweig (19) ausgebildet ist, und wobei der Transformatorabzweig (19) dafür eingerichtet ist, den Transformatorschalter (4) mit einem nachgeschalteten Transformator zu verbinden.

4. Schaltanlage (1) nach einem der vorhergehenden Ansprüche,
wobei das Überstromschutzelement (11) unterhalb des dritten Schaltgeräts (4), insbesondere unterhalb des Transformatorschalters (4) angeordnet ist; und/oder
wobei die Spannungs- und Strommesseinrichtung (23, 24) seitlich neben dem Überstromschutzelement (11) angeordnet und dazu ausgebildet sind, die Spannung und den Strom in dem Abzweig, insbesondere in dem Transformatorabzweig (19) nach dem Überstromschutzelement (11) zu messen.

5. Schaltanlage (1) nach einem der vorhergehenden Ansprüche,
wobei die Spannungs- und Strommesseinrichtung eine Spannungsmesseinrichtung (23), insbesondere einen Spannungswandler aufweist, die/der dazu ausgebildet ist, die Spannung in dem Abzweig (19), insbesondere in dem Transformatorabzweig (19) nach dem Überstromschutzelement (11) zu messen; und/oder
wobei die Spannungs- und Strommesseinrichtung einen Strommesseinrichtung (24), insbesondere einen Stromwandler aufweist, die/der dazu ausgebildet ist, den Strom in dem Abzweig (19), insbesondere in dem Transformatorabzweig (19) nach dem Überstromschutzelement (11) zu messen.

6. Schaltanlage (1) nach einem der vorhergehenden Ansprüche,
wobei die Spannungsmesseinrichtung (23) oberhalb der Strommesseinrichtung (24) angeordnet ist; und/oder
wobei die Spannungsmesseinrichtung (23) und die Strommesseinrichtung (24) mit ihren Rückseiten an der rechten Gehäuseaußenwand (10) anliegen und oder an dieser befestigt sind.

7. Schaltanlage (1) nach Anspruch 6,
wobei weiterhin eine Zähleinheit vorgesehen ist, die mit der Spannungsmesseinrichtung (23) und mit der Strommesseinrichtung (24) verbunden ist, und die dazu ausgebildet ist, aus dem Produkt der gemessenen Spannung mit dem gemessenen Strom die elektrische Leistung zu bestimmen und/oder die geflossene elektrische Energie zu erfassen; und/oder
wobei die Spannungsmesseinrichtung (23) und die Strommesseinrichtung (24) jeweils über einen Anschlusskasten (23a; 24a) verfügen, der insbesondere oberhalb der Spannungsmesseinrichtung (23) bzw. der Strommesseinrichtung (24) angeordnet ist, und der insbesondere mit seiner Rückseite an der äußeren Gehäusewand (10) anliegt und/oder an dieser befestigt ist.

8. Schaltanlage (1) nach Anspruch 6 oder 7,
wobei ein Isolierungselement (37), insbesondere ein Isolierungswinkel zwischen dem dritten Schaltgerät, insbesondere dem Transformatorschalter (4) und der Strommesseinrichtung (23), insbesondere deren Anschlusskasten (23a) angeordnet ist.

9. Schaltanlage (1) nach einem der vorhergehenden Ansprüche,
wobei das Überstromschutzelement (11) einen oberen Eingangskontakt (25) und einen unteren Ausgangskontakt (26) aufweist;
wobei die Strommesseinrichtung (24) einen oberen Eingangskontakt (27) und einen unteren Ausgangskontakt (28) aufweist; und/oder
wobei der untere Ausgangskontakt (26) des Überstromschutzelements (11) mittels eines elektrisch leitenden Verbindungsstücks (29) mit dem oberen Eingangskontakt (27) der Strommesseinrichtung (24) elektrisch verbunden ist; und
wobei das elektrisch leitende Verbindungsstück (29) eine erste mechanische Halterung für das Überstromschutzelement (11) bildet.

10. Schaltanlage (1) nach Anspruch 9,
wobei der obere Eingangskontakt (25) des Überstromschutzelements (11) mittels eines Halterungselements, insbesondere einem Winkel an dem Transformatorschalter (4), insbesondere an dessen unterem Schaltkontakt gehaltert ist.

11. Schaltanlage (1) nach einem der Ansprüche 9 bis 10,
wobei ein weiteres elektrisch leitendes Verbindungsstück (30) vorgesehen ist, das entweder den oberen Eingangskontakt (27) oder den unteren Ausgangskontakt (28) der Strommesseinrichtung (24) mit der Spannungsmesseinrichtung (23) verbindet.

12. Schaltanlage (1) nach einem der vorhergehenden Ansprüche,
wobei weiterhin eine Erdungseinrichtung (32) mit einem Antrieb und mit einem Metallmesser vorgesehen ist;
wobei der Antrieb das Metallmesser zwischen einer nach unten gerichteten Auschaltestellung und einer waagerechten Erdungsstellung bewegen kann; und
wobei in der waagerechten Erdungsstellung das Metallmesser eine Verbindung zwischen dem metallenen Gehäuse (10) und einem Gegenkontaktstück (33) an dem unteren Ausgangskontakt (28) der Strommesseinrichtung (24) herstellt.

13. Schaltanlage (1) nach einem der vorhergehenden Ansprüche,
wobei das Überstromschutzelement (11), die Strommesseinrichtung (24), die Spannungsmesseinrichtung (23) und optional die Erdungseinrichtung (32) in einem Zwischenraum unterhalb des dritten Schaltgeräts, insbesondere unterhalb des Transformatorschalters (4) und neben dem zweiten Schaltgerät (3), insbesondere neben dem mittig angeordneten Kabelschalter (3) untergebracht sind.

14. Schaltanlage (1) nach einem der vorhergehenden Ansprüche,
wobei an der Rückseite des zweiten Schaltgeräts (3), insbesondere an der Rückseite des Kabelschalters (3), der benachbart dem Überstromschutzelement (11) angeordnet ist, eine metallene Zwischenwand (17) vorgesehen ist; und/oder
wobei zwischen dieser metallenen Zwischenwand (17) und dem Überstromschutzelement (11) eine isolierende Kunststoff-Zwischenwand (36) angeordnet ist.

15. Schaltanlage (1) nach einem der vorhergehenden Ansprüche,
wobei am oberen Ende des Überstromschutzelements (11) ein Schlagbolzen (34) angeordnet ist; und/oder
wobei oberhalb des Überstromschutzelements (11) ein Hammer (35) angeordnet ist; und/oder
wobei weiterhin ein Isoliergestänge, ein Federkraftspeicher und ein Auslöseschloss vorgesehen sind;
wobei in dem Fall, dass das Überstromschutzelement (11) bedingt durch Überstrom durchschmilzt, der Schlagbolzen (34) nach oben aus dem Überstromschutzelement (11) herausbewegt wird und den Hammer (35) schräg nach oben bewegt, der wiederum über das Isoliergestänge diesen Impuls an den Federkraftspeicher weiterleitet, der über das Auslöseschloss den Transformatorschalter (4) zum Ausschalten zwingt.

16. Schaltanlage (1) nach einem der vorhergehenden Ansprüche,
weiterhin aufweisend isolierende Abdeckeinrichtungen (16), die im geöffneten Zustand der Schaltgeräte (2, 3, 4) zwischen deren Schaltkontakte (7, 8) einschiebbar sind.

## Claims

1. A switching system (1) for distributing electrical energy, comprising
switching devices (2, 3, 4) arranged in housing assemblies, the switching contacts (7, 8) of which can be actuated to open and close in a predetermined actuating direction in order to control the flow of energy from or to at least one transformer, a switching system, an energy generation plant, an energy storage device or other electrical equipment;
wherein the actuating means (12, 13, 14) of the switching contacts (7, 8) are arranged substantially adjacent to the switching contacts (7, 8);
wherein a first and a second switching device (2, 3) are arranged so as to have a substantially vertical direction of actuation and the switching contacts (7, 8) of the first and second switching devices (2, 3) are directed towards each other;
wherein a third switching device (4) having a substantially horizontal direction of actuation is arranged at least partially above the first or second switching device (2, 3); and
wherein a branch (19) is designed to connect the third switching device (4) to a downstream transformer, a downstream switching system, a downstream energy generation plant, a downstream energy storage device or other downstream electrical equipment; and
wherein a voltage measuring means (23) and a current measuring means (24) are provided which are designed to measure voltage and current in said branch (19),
**characterized in**
**that** said branch (19) comprises an overcurrent protection element (11) which has a substantially vertical installation position; and
**that** the voltage measuring means (23) and the current measuring means (24) are arranged adjacent to an outer housing wall (10) and have their rear sides abutting said outer housing wall (10) and/or secured thereto.

2. The switching system (1) according to claim 1,
wherein the first and second switching devices are designed as cable switches (2, 3); and/or
wherein the third switching device is designed as a transformer switch (4).

3. The switching system (1) according to claim 2,
wherein the branch is designed as a transformer branch (19), and wherein the transformer branch (19) is designed to connect the transformer switch (4) to a downstream transformer.

4. The switching system (1) according to any one of the preceding claims,
wherein the overcurrent protection element (11) is arranged below the third switching device (4), in particular below the transformer switch (4); and/or
wherein the voltage and current measuring means (23, 24) are arranged laterally beside the overcurrent protection element (11) and are designed to measure the voltage and the current in the branch, in particular in the transformer branch (19) downstream of the overcurrent protection element (11).

5. The switching system (1) according to any one of the preceding claims, wherein the voltage and current measuring means has a voltage measuring means (23), in particular a voltage transformer, which is designed to measure the voltage in the branch (19), in particular in the transformer branch (19) downstream of the overcurrent protection element (11); and/or
wherein the voltage and current measuring means has a current measuring means (24), in particular a current transformer, which is designed to measure the current in the branch (19), in particular in the transformer branch (19) downstream of the overcurrent protection element (11).

6. The switching system (1) according to any one of the preceding claims,
wherein the voltage measuring means (23) is arranged above the current measuring means (24); and/or
wherein the voltage measuring means (23) and the current measuring means (24) have their rear sides abutting on the right-hand housing outer wall (10) or secured to the same.

7. The switching system (1) according to claim 6,
wherein there is provided furthermore a counting unit which is connected to the voltage measuring means (23) and to the current measuring means (24) and which is designed to determine, from the product of the voltage measured and the current measured, the electrical power and/or to detect the electrical energy that has flowed; and/or
wherein the voltage measuring means (23) and the current measuring means (24) each have a connection box (23a; 24a) which is arranged in particular above the voltage measuring means (23) and the current measuring means (24), respectively, and which in particular has its rear side abutting the outer housing wall (10) and/or secured thereto.

8. The switching system (1) according to claim 6 or 7,
wherein an insulating element (37), in particular an insulating bracket, is arranged between the third switching device, in particular the transformer switch (4) and the current measuring means (23), in particular the connection box (23a) of the same.

9. The switching system (1) according to any one of the preceding claims,
wherein the overcurrent protection element (11) has an upper input contact (25) and a lower output contact (26);
wherein the current measuring means (24) has an upper input contact (27) and a lower output contact (28); and/or
wherein the lower output contact (26) of the overcurrent protection element (11) is electrically connected to the upper input contact (27) of the current measuring means (24) by means of an electrically conductive connecting piece (29); and
wherein the electrically conductive connecting piece (29) forms a first mechanical support for the overcurrent protection element (11).

10. The switching system (1) according to claim 9,
wherein the upper input contact (25) of the overcurrent protection element (11) is supported by means of a supporting element, in particular a bracket on the transformer switch (4), in particular on the lower switching contact of the same.

11. The switching system (1) according to any one of claims 9 to 10,
wherein an additional electrically conductive connecting piece (30) is provided which connects either the upper input contact (27) or the lower output contact (28) of the current measuring means (24) to the voltage measuring means (23).

12. The switching system (1) according to any one of the preceding claims,
wherein a grounding device (32) having a drive and a metal blade is provided in addition;
wherein the drive can move the metal blade between a downwardly directed off position and a horizontal grounding position; and
wherein in the horizontal grounding position the metal blade establishes a connection between the metal housing (10) and a counter contact piece (33) at the lower output contact (28) of the current measuring means (24).

13. The switching system (1) according to any one of the preceding claims,
wherein the overcurrent protection element (11), the current measuring means (24), the voltage measuring means (23) and optionally the grounding device (32) are accommodated in an intermediate space below the third switching device, in particular below the transformer switch (4) and beside the second switching device (3), in particular beside the centrally arranged cable switch (3).

14. The switching system (1) according to any one of the preceding claims,
wherein a metal partition (17) is provided on the rear side of the second switching device (3), in particular on the rear side of the cable switch (3) arranged adjacent to the overcurrent protection element (11); and/or
wherein an insulating plastic partition (36) is arranged between said metal partition (17) and the overcurrent protection element (11).

15. The switching system (1) according to any one of the preceding claims,
wherein a striker (34) is arranged at the upper end of the overcurrent protection element (11); and/or
wherein a hammer (35) is arranged above the overcurrent protection element (11); and/or
wherein an insulating linkage, a stored-energy mechanism and a trip lock are provided in addition;
wherein in the event that the overcurrent protection element (11) melts due to overcurrent, the striker (34) is moved upwardly out of the overcurrent protection element (11) and moves the hammer (35) diagonally upwards, which in turn transmits this pulse further via the insulating linkage to the stored-energy mechanism which forces the transformer switch (4) to switch off via the trip lock.

16. The switching system (1) according to any one of the preceding claims, further comprising insulating cover means (16) which in the opened state of the switching devices (2, 3, 4) can be inserted between the switching contacts (7, 8) of the same.

## Revendications

1. Installation de commutation (1) destinée à la distribution d'énergie électrique, comprenant des appareils de commutation (2, 3, 4), agencés dans des agencements de boîtier, dont les contacts de commutation (7, 8) peuvent être actionnés dans une direction d'actionnement prédéterminée pour l'ouverture et la fermeture, afin de commander le flux d'énergie de ou à au moins un transformateur, une installation de commutation (1), une installation de production d'énergie, un réservoir d'énergie ou un autre moyen de fonctionnement électrique ;
cependant que les équipements d'actionnement (12, 13, 14) des contacts de commutation (7, 8) sont agencés essentiellement de manière adjacente aux contacts de commutation (7, 8) ;
cependant qu'un premier et un deuxième appareil de commutation (2, 3) sont agencés en une direction d'actionnement essentiellement verticale et les contacts de commutation (7, 8) du premier et deuxième appareil de commutation (2, 3) sont orientés l'un vers l'autre ;
cependant qu'un troisième appareil de commutation (4) est agencé en une direction d'actionnement essentiellement horizontale au moins partiellement au-dessus du premier ou deuxième appareil de commutation (2, 3) ;
cependant qu'un embranchement (19) est équipé pour relier le troisième appareil de commutation (4) à un transformateur situé en aval, une installation de commutation située en aval, une installation de production d'énergie située en aval, un réservoir d'énergie situé en aval ou un autre moyen de fonctionnement électrique situé en aval ;
et
cependant qu'un équipement de mesure de tension (23) et un équipement de mesure de courant (24) sont prévus, lesquels sont conçus pour mesurer la tension et le courant dans l'embranchement (19) ;
**caractérisé en ce que**
l'embranchement (19) comprend un élément de protection contre les surintensités (11), lequel a un positionnement de montage essentiellement vertical ; et
l'équipement de mesure de tension (23) et l'équipement de mesure de courant (24) sont agencés de manière adjacente à une paroi extérieure de boîtier (10), leur face arrière venant en appui contre la paroi extérieure de boîtier (10) et/ou y étant fixée.

2. Installation de commutation (1) selon la revendication 1,
cependant que le premier et le deuxième appareil de commutation sont réalisés sous forme de commutateurs à câble (2, 3) ; et/ou
cependant que le troisième appareil de commutation est réalisé sous forme de commutateur de transformateur (4).

3. Installation de commutation (1) selon la revendication 2,
cependant que l'embranchement est réalisé sous forme d'embranchement de transformateur (19), et cependant que l'embranchement de transformateur (19) est conçu pour relier le commutateur de transformateur (4) à un transformateur situé en aval.

4. Installation de commutation (1) selon une des revendications précédentes,
cependant que l'élément de protection contre les surintensités (11) est agencé en-dessous du troisième appareil de commutation (4), en particulier en-dessous du commutateur de transformateur (4) ; et/ou
cependant que l'équipement de mesure de tension et de courant (23, 24) sont agencés latéralement à côté de l'élément de protection contre les surintensités (11) et conçus pour mesurer la tension et le courant dans l'embranchement, en particulier dans l'embranchement de transformateur (19) après l'élément de protection contre les surintensités (11).

5. Installation de commutation (1) selon une des revendications précédentes,
cependant que l'équipement de mesure de tension et de courant comporte un équipement de mesure de tension (23), en particulier un convertisseur de tension, lequel est conçu pour mesurer la tension dans l'embranchement 19), en particulier dans l'embranchement de transformateur (19) après l'élément de protection contre les surintensités (11) ; et/ou
cependant que l'équipement de mesure de tension et de courant comporte un équipement de mesure de courant (24) , en particulier un convertisseur de courant, lequel est conçu pour mesurer le courant dans l'embranchement 19), en particulier dans l'embranchement de transformateur (19) après l'élément de protection contre les surintensités (11).

6. Installation de commutation (1) selon une des revendications précédentes,
cependant que l'équipement de mesure de tension (23) est agencé au-dessus de l'équipement de mesure de courant (24) ; et/ou
cependant que les faces arrières de l'équipement de mesure de tension (23) et de l'équipement de mesure de courant (24) viennent en appui contre la paroi extérieure de boîtier (10) droite et/ou y sont fixées.

7. Installation de commutation (1) selon la revendication 6,
cependant que, en outre, une unité de comptage est prévue, laquelle est reliée à l'équipement de mesure de tension (23) et à l'équipement de mesure de courant (24), et laquelle est conçue pour, à partir du produit de la tension mesurée et du courant mesuré, déterminer la puissance électrique et/ ou saisir l'énergie électrique qui est passée ; et/ou
cependant que l'équipement de mesure de tension (23) et l'équipement de mesure de courant (24) disposent respectivement d'une boîte de jonction (23a; 24a) qui, en particulier, est agencée au-dessus de l'équipement de mesure de tension (23) ou de l'équipement de mesure de courant (24), et dont la face extérieure vient en particulier en appui contre la paroi extérieure de boîtier (10) et/ou y est fixée.

8. Installation de commutation (1) selon la revendication 6 ou 7,
cependant qu'un élément isolant (37), en particulier une équerre isolante, est agencé entre le troisième appareil de commutation, en particulier entre le commutateur de transformateur (4) et l'équipement de mesure de courant (23), en particulier leurs boîtes de jonction (23a).

9. Installation de commutation (1) selon une des revendications précédentes,
cependant que l'élément de protection contre les surintensités (11) comporte un contact supérieur d'entrée (25) et un contact inférieur de sortie (26) ;
cependant que l'équipement de mesure de courant (24) comporte un contact supérieur d'entrée (27) et un contact inférieur de sortie (28) ; et/ou
cependant que le contact inférieur de sortie (26) de l'élément de protection contre les surintensités (11) est, au moyen d'une pièce de liaison électroconductrice (29), relié électriquement au contact supérieur d'entrée (27) de l'équipement de mesure de courant (24) ; et
cependant que la pièce de liaison électroconductrice (29) constitue une première attache mécanique pour l'élément de protection contre les surintensités (11).

10. Installation de commutation (1) selon la revendication 9,
cependant que le contact supérieur d'entrée (25) de l'élément de protection contre les surintensités (11) est attaché au moyen d'un élément d'attache, en particulier par une équerre, au commutateur de transformateur (4), en particulier à son contact inférieur de commutation.

11. Installation de commutation (1) selon une des revendications de 9 à 10,
cependant qu'une autre pièce de liaison électroconductrice (30) est prévue, laquelle relie soit le contact supérieur d'entrée (27), soit le contact inférieur de sortie (28) de l'équipement de mesure de courant (24) à l'équipement de mesure de tension (23).

12. Installation de commutation (1) selon une des revendications précédentes,
cependant que, en outre, un équipement de mise à la terre (32) ayant un entraînement et ayant une lame en métal est prévu ;
cependant que l'entraînement peut déplacer la lame en métal entre une position de coupure orientée vers le bas, et une position horizontale de mise à la terre ; et
cependant que, dans la position horizontale de mise à la terre, la lame en métal établit une liaison entre le boîtier métallique (10) et une pièce de contre-contact (33) au contact inférieur de sortie (28) de l'équipement de mesure de courant (24).

13. Installation de commutation (1) selon une des revendications précédentes,
cependant que l'élément de protection contre les surintensités (11), l'équipement de mesure de courant (24), l'équipement de mesure de tension (23) et, en option, l'équipement de mise à la terre (32) sont logés dans un espace intermédiaire en-dessus du troisième appareil de commutation, en particulier en-dessus du commutateur de transformateur (4) et à côté du deuxième appareil de commutation (3), en particulier à côté du commutateurs à câble (3) agencé au centre.

14. Installation de commutation (1) selon une des revendications précédentes,
cependant que, à la face arrière du deuxième appareil de commutation (3), en particulier à la face arrière du commutateur à câble (3) agencé de manière adjacente à l'élément de protection contre les surintensités (11), une paroi métallique intermédiaire est prévue ; et/ou
cependant que, entre cette paroi métallique intermédiaire (17) et l'élément de protection contre les surintensités (11), une paroi intermédiaire isolante en matière plastique est agencée.

15. Installation de commutation (1) selon une des revendications précédentes,
cependant que, à l'extrémité supérieure de l'élément de protection contre les surintensités (11), un percuteur (34) est agencé ; et/ou
cependant que, au-dessus de l'élément de protection contre les surintensités (11), un marteau (35) est agencé ; et/ou
cependant que, en outre, des tringles d'isolation, un accumulateur d'énergie à ressort et un verrou de déclenchement sont prévus ;
cependant que, dans le cas où l'élément de protection contre les surintensités (11), pour cause de surintensité, fond, le percuteur (34) est déplacé vers le haut hors de l'élément de protection contre les surintensités (11) et déplace le marteau (35) obliquement vers le haut, lequel à son tour, par l'intermédiaire des tringles d'isolation, transmet cette impulsion à l'accumulateur d'énergie à ressort, lequel, par l'intermédiaire du verrou de déclenchement, contraint le commutateur de transformateur (4) à la mise hors circuit.

16. Installation de commutation (1) selon une des revendications précédentes,
comprenant en outre des équipements de recouvrement (16) qui, à l'état ouvert des appareils de commutation (2, 3, 4), peuvent être introduits entre leurs contacts de commutation (7, 8).
